Europäisches Patentamt

European Patent Office

Office européen des brevets

(11) Veröffentlichungsnummer : **0 067 944**
**B1**

(12) **EUROPÄISCHE PATENTSCHRIFT**

(45) Veröffentlichungstag der Patentschrift :
02.01.86

(51) Int. Cl.⁴ : **B 61 D 17/22, B 60 D 5/00**

(21) Anmeldenummer : 82103663.9

(22) Anmeldetag : 29.04.82

(54) Wagenübergangseinrichtung für spurgeführte Hochgeschwindigkeitsfahrzeuge.

(30) Priorität : 24.06.81 DE 3124682

(43) Veröffentlichungstag der Anmeldung :
29.12.82 Patentblatt 82/52

(45) Bekanntmachung des Hinweises auf die Patenterteilung : 02.01.86 Patentblatt 86/01

(84) Benannte Vertragsstaaten :
FR GB IT

(56) Entgegenhaltungen :
EP-A- 0 043 444
DE-A- 1 455 082
DE-C- 939 817

(73) Patentinhaber : Messerschmitt-Bölkow-Blohm Gesellschaft mit beschränkter Haftung
Robert-Koch-Strasse
D-8012 Ottobrunn (DE)

(72) Erfinder : Hassel, Helmut, Dr.-Ing.
Bodenehrstrasse 20
D-8850 Donauwörth (DE)
Erfinder : Stark, Reimund, Ing. grad.
Flurstrasse 10
D-8891 Griesbeckerzell (DE)

Jouve, 18, rue St-Denis, 75001 Paris, France

## Beschreibung

Die Erfindung bezieht sich auf eine Wagenübergangseinrichtung für spurgeführte Hochgeschwindigkeitsfahrzeuge, die aus einem ganz oder teilweise um die Wagenaußenstruktur geführten aufblasbaren Hohlkammerprofilbalg besteht, der über ein Druckluftsystem bezüglich des Innendruckes automatisch über ein Reglersystem in verschiedene Stufen einstellbar ist.

Bei den bisher bekanntgewordenen Wagenübergangseinrichtungen, z. B. DE-A-1 455 082 sind die verwendeten Gummihohlwülste undicht und aerodynamisch ungünstig, da der Spalt zwischen den Wagen nicht außenhautbündig abgedeckt wird. Eine andere bisher bekannte Variante stellen die sogenannten Faltenbälge dar, die ebenfalls keine glatte Außenhaut bilden und unten offen sind, wodurch Zugluft, Schmutz und die beträchtlichen Fahrgeräusche eindringen können.

Durch die DE-C-939 817 ist eine elastische Balgverbindung für Schienenfahrzeuge bekanntgeworden, bei der mehrere einzelne schlauchartige Stabilisierungselemente angeordnet sind und die außenbündige aerodynamische Verkleidung aussteifen. Für Hochgeschwindigkeits-, Kurven- und S-Bogenfahrten ist eine solche Ausgestaltung jedoch ungeeignet, denn infolge der ständigen Reibungskräfte werden die mit Überdruck gefüllten elastischen Ringe in ihrer Lebensdauer stark beeinträchtigt.

In der nicht vorveröffentlichten (Art. 54.3 EPÜ) EP-A-0 043 444 ist eine Wagenübergangseinrichtung der eingangs genannten Art beschrieben. Es ist jedoch mit dem verwendeten Reglersystem nicht möglich, dieses sowohl zur Konstantdrucksteuerung in einer Profilkammer als auch gleichzeitig zur Variation des Luftdruckes in den anderen Profilkammern zu verwenden.

Der Erfindung liegt die Aufgabe zugrunde, eine Wagenübergangseinrichtung der eingangs genannten Art zu schaffen, die den aerodynamischen Widerstand minimiert und in ihrer Steifigkeit auf die jeweiligen Erfordernisse von Hochgeschwindigkeitsfahrt und Kurvenfahrt automatisch anpaßbar ist.

Diese Aufgabe wird in zuverlässiger Weise durch die im Anspruch 1 niedergelegten Maßnahmen erfüllt. In der nachfolgenden Beschreibung sind mehrere Ausführungsbeispiele abgehandelt und erläutert sowie in den Figuren der Zeichnung schematisch dargestellt.

Durch die vorgeschlagenen Maßnahmen sind nun eine ganze Reihe von besonderen Vorteilen erzielt worden. So wird eine wesentliche Reduzierung der aerodynamischen Widerstände durch die Außenhautbündigkeit des gesamten Zugverbandes erzielt, was sich erheblich auf den Energieverbrauch auswirkt. Weiterhin sind eine große Formstabilität und Dichtheit sowie eine glatte Außenfläche erzielt worden, was sich auf die Schallisolierung des inneren Wagenüberganges und damit auch auf die Passagierräume auswirkt. Dieser äußere Wagenübergang weist durch die vorgeschlagenen Maßnahmen bei Schnellfahrten eine stabile, windschlüpfrige und reibungsarme Außenkontur auf und bei langsamen Fahrten durch enge Kurven die erforderliche Flexibilität. Es zeigen

Figur 1 einen Querschnitt durch eine Wagenstruktur mit angesetztem Hohlkammerprofilbalg,

Figur 2 einen Schnitt entlang der Linie A-A gemäß Fig. 1,

Figur 2a einen Querschnitt durch ein Mehrkammerprofil mit Befestigungswülsten,

Figur 3 ein Blockschaltbild einer ersten Ausführungsform für die automatische Steuerung des Luftbalginnendruckes,

Figur 4 ein Blockschaltbild einer zweiten Ausführungsform für die Innendrucksteuerung und zwar für ein Mehrkammerluftbalgsystem,

Figur 5 eine schematische Darstellung des Mehrkammerprofils mit variabler Druckluftzufuhr,

Figur 6 ein Blockschaltbild einer Analogregelungsausführung,

Figur 7 eine schematische Darstellung des Aufbaus gemäß Fig. 6,

Figur 8 ein Blockschaltbild einer Analogregelung mit zusätzlicher gesonderter Steuerung der Kammer KI des Hohlkammerluftbalges,

Figur 9 eine schematische Darstellung des Aufbaus gemäß Fig. 8,

Figur 10 ein Blockschaltbild einer Ausführungsform mit Kompressor in schematischer Darstellung,

Figur 11 ein Blockschaltbild einer Analogwandlerausführung mit integriertem Impedanzwandler,

Figur 12 ein Blockschaltbild, einer Analogwandlerausführung mit integrierter elektronischer Schaltung für Diskretisierung des Eingangssignals.

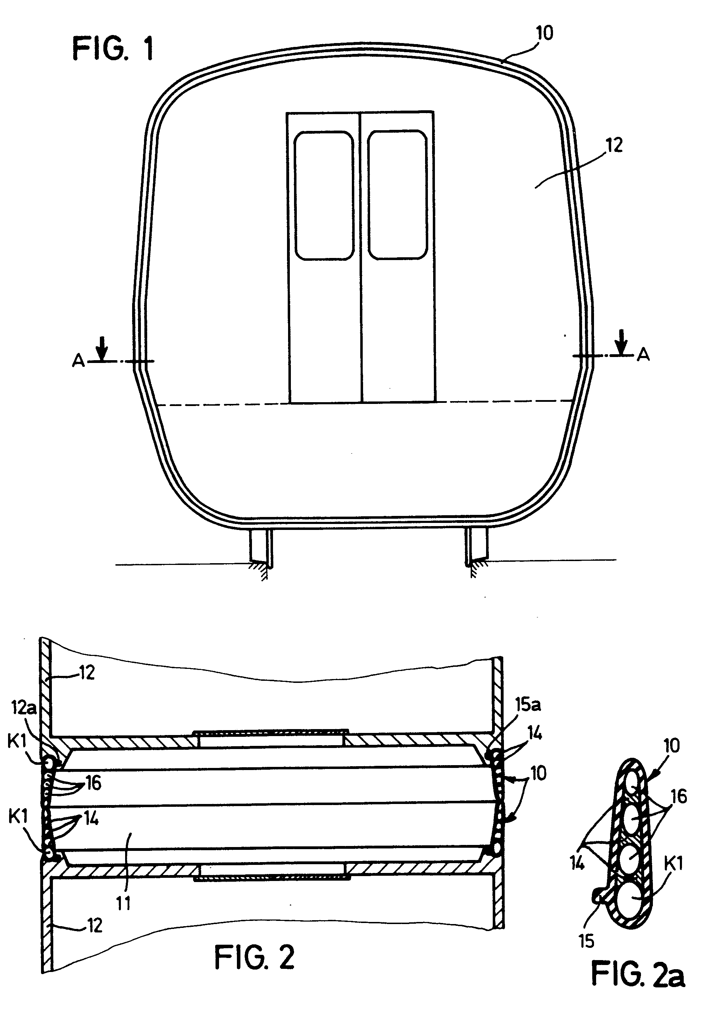

Die Fig. 1 und 2 zeigen in Ansicht und Draufsicht einen Wagenübergang, wie er bei einer Zusammenkopplung von zwei Schienenwaggons entsteht. An der Außenkontur jedes Wagens 12 befindet sich in einer Führung 12a der Befestigungswulst 15 eines Mehrkammerhohlprofils 10, wobei unter Umständen auch ein Einkammerhohlprofil ausreichend ist. Das in Fig. 2a gezeigte Ausführungsbeispiel behandelt aber die Form mit einem Mehrkammerprofil.

Dieses Profil 10 setzt sich aus mehreren Luftkammern 16 und einer ersten Kammer KI zusammen. Diese Kammern sollen nun automatisch durch die zugeigene Druckluftanlage auf die jeweilige Hochgeschwindigkeitsfahrt und Kurvenfahrt in der Balgsteifigkeit gesteuert werden.

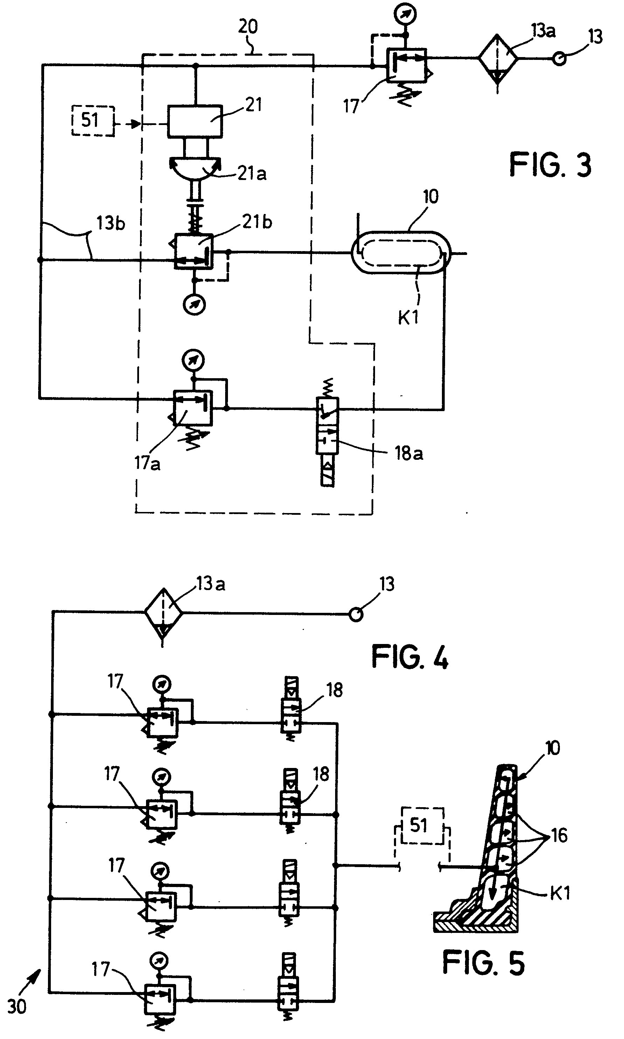

Hierzu zeigt die Fig. 3 ein Ausführungsbeispiel des Reglersystems 20. Der vorhandenen mit 6 bar beaufschlagten Druckluftleitung 13 wird über ein Filter 13a ein Druckregler 17 angeschlossen, der mit dem Mehrkammerluftbalg 10 und KI über eine Druckluftleitung 13b in Verbindung steht. In diese Leitung 13b ist nun ein elektro-pneumatischer Stellungsregler 21 mit einem pneumatischen Drehantrieb 21a und einem Manometerregler 21b geschaltet, wodurch eine automatische Regelung des Luftkammerinnendruckes durchgeführt wird. Die stufenlose Drehzahlabhängigkeit wird bei diesem Ausführungsbeispiel dadurch erreicht, daß der Stellungsregler 21 vom Tachometergenerator 51 ein elektrisches Signal, z. B. in Form von Stromstärke im Bereich von 4 ... 20 mA enthält. Nun kann in diesen Steuerkreis noch eine zusätzliche Steuerschaltung für die gesonderte Druckluftsteuerung in der Kammer KI angeordnet sein, die einen konstanten Druck in der Kammer KI zur Unterstützung der Schraubbefestigung 15 oder des Spannseilandruckes (Spannseil 15a) gewährleistet. Hierzu ist ein Druckregler 17a mit beispielsweise 3 bar und ein 3/2-Wege-Magnetventil 18a vorgesehen, die direkt auf die Kammer KI wirken.

In der Fig. 4 ist nun ein Ausführungsbeispiel gezeigt, bei dem der Innendruck jeder einzelnen Kammer 16 in dem Balgprofil 10 mit variablem Druck beaufschlagt werden kann. Auch hier wird die in Stufen eingeteilte Steuerung des Mehrkammerluftbalg-Innendruckes geschwindigkeitsabhängig durch elektrische Signale aus dem Tachometergenerator 51 oder dem Zug-Bremssteuerungssystem (nicht gezeichnet) vorgenommen. Dabei sind dem Reglersystem 30 in Stufen von 1 bis 3 bar eingestellte Druckregler 17 mit bestimmten Geschwindigkeitsbereichen zugeordnet. Auch hier ist an die zugeigene Druckluftleitung 13 ein Filter 13a angeschlossen, dem nun je Kammer 16 und KI ein Druckregler 17 mit einem Mehrwegeventil 18 nachgeordnet sind. Es handelt sich hier beispielsweise um 2/2-Wege-Magnetventile und eine zusätzliche Steuerung des Luftdruckes zur Konstanthaltung in Kammer KI ist ohne besonderen Aufwand auch hier möglich.

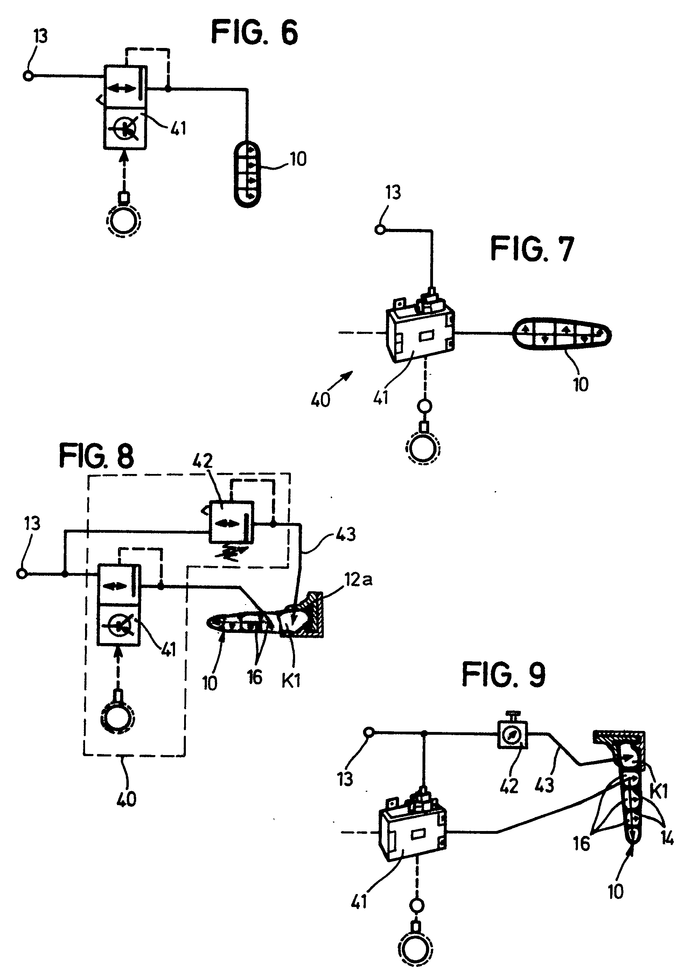

Mit 40 ist ein Analogregelkreis eines weiteren Ausführungsbeispiels bezeichnet, das in den Fig. 6 und 7 gezeigt ist. In die zugeigene Druckluftleitung 13 mit 6 bar ist ein Drehzahl-Druckwandler 41 geschaltet, der im Bereich von 0 bis 2 bar arbeitet. Hierbei handelt es sich um einen bekannten sogenannten elektro-pneumatischen Umsetzer, der zur elektrischen Fernsteuerung von pneumatischen Drücken, die abhängig von einem eingeprägten potentialfreien Strom ausgesteuert werden, dient. Die geschwindigkeitsabhängige Innendrucksteuerung des Mehrkammerhohlprofils 10 erfolgt wie vorbeschrieben durch Signale des Tachometergenerators oder des Bremssteuersystems.

In den Fig. 8 und 9 ist nun ein Ausführungsbeispiel gezeigt, das im wesentlichen auf der Anordnung nach den Fig. 6 und 7 beruht und nur zur gesonderten Konstantdrucksteuerung der Luftkammer KI des Mehrkammerhohlprofils 10 mit einem zusätzlichen Steuerkreis 43 versehen ist. In diese von der zugeigenen Druckluftleitung 13 direkt zur Kammer KI führenden Leitung 43 ist ein Druckminderventil 42, das beispielsweise im Bereich von 2 bar arbeitet, geschaltet, so daß in KI immer ein Konstantdruck aufrechterhalten bleibt.

Die automatische Steuerung der anderen Profilkammern 16 wird — wie in den Fig. 6 und 7 gezeigt — von einem Drehzahl-Druckwandler 41 durchgeführt. Mit 40 ist wieder der Analogregelkreis bezeichnet. Die Versorgungsleitung vom Drehzahl-Druckwandler 41 ist durch die Stege 14 der Kammerprofile 10 geführt.

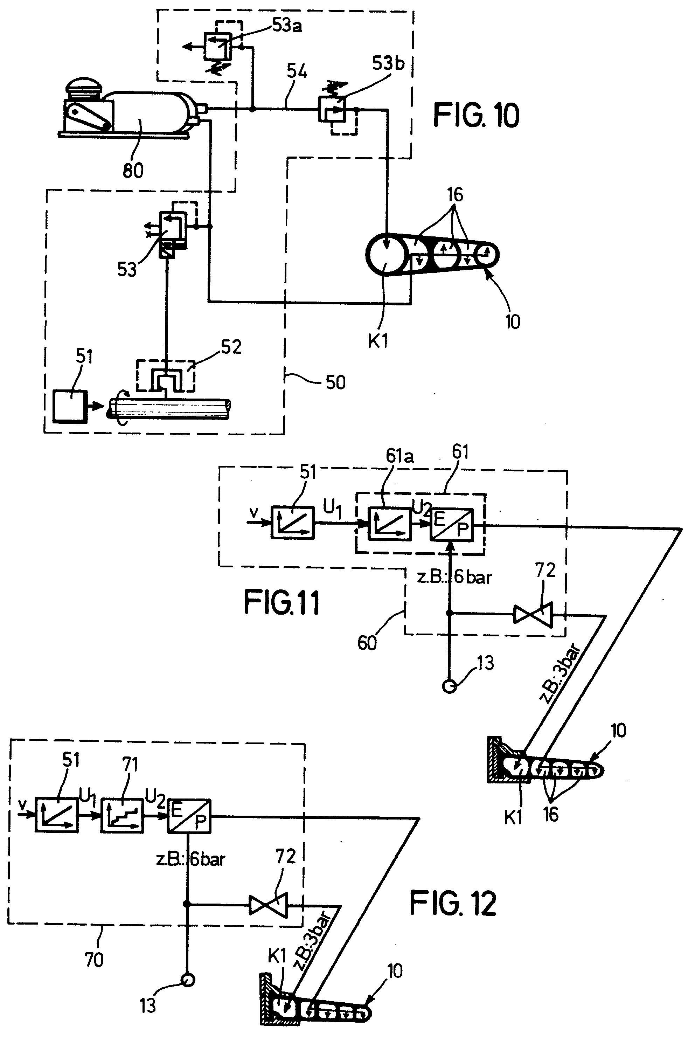

Die Fig. 10 zeigt nun ein Reglersystem 50, bei dem die zugeigene Druckluftleitung nicht in Anspruch genommen wird, sondern ein Kompressor 80 die Druckluftversorgung übernimmt. Zur Steuerung wird entweder der Tachometergenerator 51 oder das Bremssteuerungssystem herangezogen, denen ein Impulsgeber 52 zugeordnet ist, der mit einem Druckregler 53 in Verbindung steht und die Regelung der Luftkammern 16 durchführt. Zur Beaufschlagung der Kammer KI mit Konstantdruck ist vom Kompressor 80 eine direkte Leitung 54 mit einem Druckminderventil 53b geführt sowie ein weiterer Druckregler 53a angeordnet, der dafür sorgt, daß in den Fällen, in denen der Druck über den eingestellten Wert steigt, die überschüssige Luft in die Atmosphäre gelangt.

Die Fig. 11 zeigt einen Analogregelkreis 60 eines weiteren Ausführungsbeispieles. Zwischen die zugeigene Druckluftleitung 13 mit 6 bar und den Tachometergenerator 51 ist ein Analogwandler 61 mit integriertem Impedanzwandler 61a geschaltet, der die stufenlose Eingangsspannung aus dem Tachometergenerator 51 in einen ebenfalls stufenlosen Druck im Mehrkammerluftbalg 16 fahrgeschwindigkeitsabhängig umsetzt. In diesem Ausführungsvorschlag wird die Kammer KI separat mit Hilfe eines Druckreglers 72 ständig mit Konstantdruck von 3 bar beaufschlagt. Der Tachometergenerator 51 liefert beispielsweise eine Spannung $U_1$ (v) als Funktion der Fahrgeschwindigkeit v, die dann weiter transformiert wird auf eine Spannung $U_2$ (v), welche als Steuerspannung für den Analogwandler 61 benötigt wird. Nun sind zufälligerweise die Kennliniendiagramme für $U_1$ (v) und $U_2$ (v) gleich. Das heißt nun, daß es sich in der Fig. 11 nicht um gleiche Symbole für ungleiche Aggregate (51, 61a) handelt, sondern um gleiche Kennliniendiagramme.

Die Fig. 12 zeigt einen Analogregelkreis 70 eines weiteren Ausführungsbeispieles, der sich von der Anordung nach Fig. 11 dadurch unterscheidet, daß statt des Impedanzwandlers eine elektronische Schaltung 71 für die Diskretisierung des Eingangssignals verwendet wird und der Druckaufbau in 10 in mehreren Stufen geschwindigkeitsabhängig vorgenommen wird.

**Patentansprüche**

1. Wagenübergangseinrichtung für spurgeführte Hochgeschwindigkeitsfahrzeuge, die aus einem ganz oder teilweise um die Wagenaußenstruktur geführten aufblasbaren Hohlkammerprofilbalg besteht, der über ein Druckluftsystem bezüglich des Innendruckes automatisch über ein Reglersystem in verschiedene Stufen einstellbar ist, dadurch gekennzeichnet, daß sich das Reglersystem (20, 30, 40, 50, 60, 70) zur Konstantdrucksteuerung in einer ersten, an der Wagenaußenstruktur anliegenden Kammer (KI) und zur Variierung des Luftdruckes in den anderen Kammern (16) des Mehrkammerprofilbalges (10) aus einem drehzahlabhängigen Druckwandler (21, 41) oder einem Tachometergenerator (51) und einer zusätzlichen Druckregeleinrichtung für Konstantdruck (17a, 18a ; 42, 43 ; 53a, 53b ; 72) zusammensetzt.

2. Einrichtung nach Anspruch 1, dadurch gekennzeichnet, daß die zusätzliche Druckregeleinrichtung als Druckminderventil (42, 53b, 72) ausgebildet ist.

3. Einrichtung nach Anspruch 1, dadurch gekennzeichnet, daß die zusätzliche Druckregeleinrichtung (53b) mit einem weiteren Druckregler (53a) versehen ist, der bei über den eingestellten Wert ansteigendem Druck die überschüssige Luft in die Atmosphäre ausstößt.

4. Einrichtung nach Anspruch 1, dadurch gekennzeichnet, daß dem Tachometergenerator (51) ein Analogwandler (61) mit Impedanzwandler (61a) zugeordnet ist.

5. Einrichtung nach Anspruch 1, dadurch gekennzeichnet, daß dem Tachometergenerator (51) ein Analogwandler mit integrierter elektronischer Schaltung (71) zugeordnet ist.

## Claims

1. A carriage communication mechanism for track-guided high-speed vehicles, which consists of an inflatable hollow-chamber profile bellows which is conducted wholly or partially around the carriage outer structure and which is adjustable, by way of a compressed-air system, with respect to the internal pressure automatically by way of a regulator system into various stages, characterised in that the regulator system (20, 30, 40, 50, 60, 70), for the constant pressure control in a first chamber (K1) butting against the carriage outer structure and for the variation of the air pressure in the other chambers (16) of the multi-chamber profile bellows (10), is composed of a speed-dependent pressure transducer (21, 41) or a tachometer generator (51) and an additional pressure regulating device for constant pressure (17a, 18a ; 42, 43 ; 53a, 53b ; 72).

2. A mechanism according to claim 1, characterised in that the additional pressure regulating device is designed as a pressure-reducing valve (42, 53b, 72).

3. A mechanism according to claim 1, characterised in that the additional pressure regulating device (53b) is provided with a further pressure regulator (53a) which, in the event of the pressure rising above the set value, expels the surplus air into the atmosphere.

4. A mechanism according to claim 1, characterised in that an analogue transformer (61) having an impedance transformer (61a) is associated with the tachometer generator.

5. A mechanism according to claim 1, characterised in that an analogue transformer having an integrated electronic circuit (71) is associated with the tachometer generator.

## Revendications

1. Passage de communication pour véhicules ferroviaires à grande vitesse, constitué d'un soufflet profilé à compartiments creux gonflable, qui s'étend en totalité ou en partie autour de la structure extérieure du wagon, et dont la pression intérieure est réglable automatiquement à différents niveaux par l'intermédiaire d'un système de régulation et d'un système d'air comprimé, caractérisé par le fait que le système de régulation (20, 30, 40, 50, 60, 70), en vue de commander une pression constante dans un premier compartiment (K1) voisin de la structure extérieure du wagon et de faire varier la pression d'air dans les autres compartiments (16) du soufflet profilé (10) à compartiments multiples, se compose d'un convertisseur de pression en fonction de la vitesse (21, 41) ou d'une génératrice tachymétrique (51), et d'un dispositif de régulation de pression supplémentaire pour la pression constante (17a, 18a ; 42, 43 ; 53a, 53b ; 72).

2. Passage de communication selon la revendication 1, caractérisé par le fait que le dispositif supplémentaire de régulation de pression est réalisé sous la forme d'un détendeur (42, 53b, 72).

3. Passage de communication selon la revendication 1, caractérisé par le fait que le dispositif supplémentaire de régulation de pression (53b) est doté d'un autre régulateur de pression (53a) qui, lorsque la pression augmente au-delà de la valeur réglée, évacue l'excédent d'air dans l'atmosphère.

4. Passage de communication selon la revendication 1, caractérisé par le fait qu'un convertisseur analogique (61) muni d'un transformateur d'adaptation d'impédance (61a) est affecté à la génératrice tachymétrique (51).

5. Passage de communication selon la revendication 1, caractérisé par le fait qu'un convertisseur analogique muni d'un circuit électronique intégré (71) est affecté à la génératrice tachymétrique (51).

FIG. 1

10

12

A

A

FIG. 2

12

12a

K1

15a

14

16

10

K1

14

11

12

10

16

14

K1

15

FIG. 2a

20

51

21

21a

13b

21b

10

K1

13a

13

17

**FIG. 3**

17a

18a

13a

13

**FIG. 4**

17

18

17

18

10

51

16

17

K1

17

**FIG. 5**

30

17

FIG. 6

13

41

10

FIG. 7

13

40

41

10

FIG. 8

42

43

13

12a

41

10    16    K1

40

FIG. 9

13

42    43

K1

41

16    14

10

FIG. 10

FIG.11

FIG. 12

4